# EUROPÄISCHE PATENTSCHRIFT

(11) **EP 3 649 712 B1**
(45) Veröffentlichungstag und Bekanntmachung des Hinweises auf die Patenterteilung: **16.12.2020**
(21) Anmeldenummer: 19718300.7
(22) Anmeldetag: 11.04.2019
(51) Int. Cl.: H02G 3/06, H02G 15/007, H02G 3/22

(54) **KABELDURCHFÜHRUNGSEINRICHTUNG**
CABLE LEADTHROUGH DEVICE
DISPOSITIF DE PASSAGE DE CÂBLES

(30) Priorität: 20.04.2018 DE 102018109591
(43) Veröffentlichungstag der Anmeldung: 13.05.2020
(73) Patentinhaber: Bimed Teknik Aletler Sanayi ve Ticaret A.S., 34900 Büyükcekmece Istanbul (TR)
(72) Erfinder: ALBUKREK, Yilmaz, 34149 Yesilkoey, Istanbul (TR); KEMPF, Klaus, 70563 Stuttgart (DE)
(74) Vertreter: DREISS Patentanwälte PartG mbB
(86) Internationale Anmeldenummer: PCT/EP2019/059293
(87) Internationale Veröffentlichungsnummer: WO 2019/201743

(56) Entgegenhaltungen:
- DE-A1-102010 062 820
- DE-A1-102016 214 578
- US-A1- 2003 155 147
- US-A1- 2005 035 594

## Beschreibung

Die Erfindung betrifft eine Kabeldurchführungseinrichtung zur Durchführung eines Kabels durch eine Öffnung in einer Wand, mit den Merkmalen des Oberbegriffs des Patentanspruchs 1, gemäß US 2003/0155147 A1.

Aus der DE 10 2016 214 578 A1 ist eine Kabeldurchführungseinrichtung bekannt, bei der eine Zugentlastungswirkung dadurch erzielt wird, dass kugelförmige Klemmelemente mittels einer Verschraubung gegen ein durch einen Durchführkanal eines Gehäuses durchgeführtes Kabel gedrückt wird. Bei der Montage eines Kabels muss das Kabel also zunächst durch den Durchführkanal durchgeführt werden, und in einem zweiten Schritt muss die Verschraubung betätigt werden, um die kugelförmigen Klemmelemente in die Mantelfläche des durchgeführten Kabels einzudrücken und um auf diese Weise eine Zugentlastungswirkung zu erzielen.

Aus der DE 10 2010 062 820 A1 und der US 2005/0035594 A1 sind weitere Kabeldurchführungseinrichtungen bekannt.

Der vorliegenden Erfindung liegt die Aufgabe zugrunde, eine Kabeldurchführungseinrichtung bereitzustellen, welche eine besonders einfache Montage eines Kabels ermöglicht und flexibel nutzbar ist. Gleichzeitig soll eine hohe Zugentlastungswirkung erzielt werden.

Diese Aufgabe wird bei einer Kabeldurchführungseinrichtung der eingangs genannten Art erfindungsgemäß durch die kennzeichnenden Merkmale des Patentanspruchs 1 gelöst.

Eine erfindungsgemäße Ausgestaltung hat den Vorteil, dass Kabel mit unterschiedlichen Durchmessern auf einfache Weise durchgeführt werden können und eine Zugentlastung bewirkt wird, ohne dass ein zusätzlicher Montageschritt erforderlich ist. Hierdurch wird eine besonders einfache und schnelle Montage eines Kabels ermöglicht.

In einem Ausgangzustand der Kabeldurchführungseinrichtung ohne durchgeführtes Kabel nimmt das mindestens eine Klemmelement seine Klemmstellung ein, da das Klemmelement auch in dem Ausgangszustand der Kabeldurchführungseinrichtung mittels der Kraftbeaufschlagungseinrichtung in Richtung seiner Klemmstellung beaufschlagt ist. In dieser Klemmstellung befindet sich das Klemmelement in seiner bezogen auf die Durchführachse radial innersten Position, sodass der Durchführkanal radial verjüngt ist. Beim Einführen eines Kabels wird das mindestens eine Klemmelement aus seiner Klemmstellung in Richtung seiner Freigabestellung ausgelenkt. Aufgrund der Neigung zwischen Führungsachse und Durchführachse wird das Klemmelement dabei nicht nur parallel zu der Führungsachse, sondern gleichzeitig auch von der Durchführachse weg nach radial außen bewegt, sodass der Durchführkanal freigegeben wird und das Kabel durch den Durchführkanal durchgeführt werden kann. Das Klemmelement ist vorzugsweise entlang der Führungsachse unverlierbar an der Führungseinrichtung gehalten.

Dadurch, dass das mindestens eine Klemmelement entlang der geneigten Führungsachse auch in radialer Richtung verschiebbar ist, kann ein weiter Klemmbereich für unterschiedliche Kabeldurchmesser abgedeckt werden. Hierdurch wird eine flexible Nutzbarkeit der Kabeldurchführungseinrichtung ermöglicht.

Vorzugsweise weist die Führungseinrichtung Anschläge auf, die einen Verstellweg des mindestens einen Klemmelements entlang der Führungsachse begrenzen und somit zwei Endstellungen definieren. Im Sinne der vorliegenden Erfindung ist mit der Klemmstellung und der Freigabestellung jeweils eine solche Endstellung oder eine hierzu benachbarte Stellung gemeint. In Abhängigkeit des Durchmessers des Kabels kann eine Klemmwirkung, bzw. eine Freigabe des Kabels, also auch bereits vor Erreichen der jeweiligen Endstellung eintreten.

Aufgrund der Kraftbeaufschlagung des Klemmelements in Richtung seiner Klemmstellung und aufgrund der Neigung der Führungsachse wird von dem Klemmelement eine bezogen auf die Durchführachse nach radial innen wirkende Klemmkraft auf das durchgeführte Kabel übertragen. Dies hat den Vorteil, dass ein durchgeführtes Kabel sicher in Position gehalten wird und ein Verrutschen des Kabels verhindert wird. Ferner bewirkt die Klemmkraft, dass das Klemmelement bei einem Zurückziehen des Kabels entlang der Durchführachse mit dem Kabel mitgeführt wird. Das Klemmelement wird dabei entlang der Führungsachse in Richtung seiner Klemmstellung bewegt und somit immer weiter nach radial innen bewegt. Hierdurch wird eine immer größer werdende radiale Klemmkraft bewirkt und somit eine Selbsthemmung erzielt. Dies hat den Vorteil, dass ein einfaches Zurückziehen eines bereits durchgeführten Kabels eine besonders hohe Zugentlastungswirkung bewirkt.

Die von der Kraftbeaufschlagungseinrichtung erzeugte Antriebskraft ist vorzugsweise so gewählt, dass die resultierende Klemmkraft zwischen dem mindestens einen Klemmelement und einem durchgeführten Kabel zum einen hoch genug ist, dass das Klemmelemente bei einem Zurückziehen des Kabels sicher mitgeführt wird. Zum anderen ist eine nicht zu hohe Klemmkraft vorteilhaft, sodass das mindestens eine Klemmelement beim Durchführen eines Kabels leicht ausgelenkt werden kann und das Kabel somit einfach durchgeführt werden kann.

Bei einer bevorzugten Ausführungsform schließt die Durchführachse mit der Führungsachse einen spitzen Winkel ein. Der Neigungswinkel zwischen der Durchführachse und der Führungsachse bestimmt das Verhältnis von axialer Bewegung (entlang der Durchführachse) zu radialer Bewegung des mindestens einen Klemmelements bei einer Bewegung entlang der Führungsachse. Besonders bevorzugt ist es, wenn die Durchführachse mit der Führungsachse einen Winkel zwischen 5° und 45° einschließt. In diesem Winkelbereich ist eine Selbsthemmung der Kabeldurchführungseinrichtung besonders begünstigt. Kleinere Winkel (beispielsweise zwischen 5° und 25°) haben den Vorteil, dass das mindestens eine Klemmelement leichter von einem durchgeführten Kabel mitgeführt werden kann. Größere Winkel (beispielsweise zwischen 20° und 45°) haben hingegen den Vorteil, dass ein geringerer Verstellweg des Klemmelements in axialer Richtung (also in Richtung entlang der Durchführachse) vorgehalten werden muss, um das Klemmelement um einen vorgegebenen Verstellweg in radialer Richtung verschieben zu können. Hierdurch beansprucht die Kabeldurchführungseinrichtung parallel zu der Durchführachse gesehen besonders wenig Bauraum. Dies ist insbesondere vorteilhaft, wenn ein weiter Klemmbereich (und somit ein großer Verstellweg in radialer Richtung) vorgehalten werden soll. Im Rahmen der Erfindung ist es daher insbesondere bevorzugt, wenn die Durchführachse mit der Führungsachse einen Winkel einschließt, der zwischen 15° und 30° beträgt, insbesondere zwischen 20° und 25°.

Bei einer weiteren bevorzugten Ausführungsform weist das mindestens eine Klemmelement eine Klemmfläche zur Anlage an ein durchgeführtes Kabel aufweist, wobei sich die Klemmfläche vollständig oder zumindest mit einem Teilabschnitt parallel zu der Durchführachse erstreckt. Vorzugsweise ist die mindestens eine Klemmfläche zu der Durchführachse konzentrisch, insbesondere teilzylindrisch, ausgebildet. Ferner ist es möglich, dass die Klemmfläche zu einer Mantelfläche eines durchgeführten Kabels tangential orientiert ist. Durch den flächigen Kontakt zwischen Klemmelement und Kabel kann eine Klemmkraft besonders sicher vom Klemmelement auf das Kabel übertragen werden und somit eine hohe Zugentlastung des Kabels erzielt werden. Besonders bevorzugt ist es, wenn sich die Klemmfläche über ein Mindestmaß hinweg parallel zu der Durchführachse erstreckt, beispielsweise mit einem Mindestmaß von 2 mm, vorzugsweise von 5 mm, insbesondere von 10 mm. Durch eine teilzylindrische und/oder tangentiale Ausgestaltung der Klemmfläche wird ferner, insbesondere für Kabel mit einer zylindrischen Außenfläche (bspw. von einer Isolation des Kabels), eine besonders sichere Kraftübertragung und damit eine hohe Zugentlastung erzielt.

Ferner ist es bevorzugt, wenn die Klemmfläche eine Oberflächenstrukturierung zur Verbesserung der Haftung zwischen der Klemmfläche und einem durchgeführten Kabel aufweist. Dies hat den Vorteil, dass das Klemmelement bei einem Zurückziehen des Kabels sicher mitgeführt wird und eine hohe Selbsthemmung und damit Zugentlastungwirkung erzielt wird. Beispielsweise ist es möglich, dass die Klemmfläche eine große Oberflächenrauheit aufweist und/oder aus einem Material mit einem hohen Reibwert hergestellt ist (bspw. durch Verwendung eines Elastomers oder durch Verwendung von Elastomeranteilen).

Besonders bevorzugt ist es, wenn die Oberflächenstrukturierung in Form einer Mehrzahl von über die Klemmfläche verteilt angeordneter Klemmnoppen ausgebildet ist. Dabei ist es denkbar, dass sich die Klemmnoppen beim Anpressen an das Kabel im Zuge des Zurückziehens des Kabels zumindest teilweise in eine Mantelfläche, bspw. in die Isolierung, des Kabels eingraben. Eine dabei entstehende formschlüssige Verbindung zwischen Klemmelement und Kabel ermöglicht eine besonders sichere Kraftübertragung zwischen Klemmelement und Kabel und damit eine hohe Zugentlastungswirkung.

Bei einer weiteren bevorzugten Ausführungsform weist das mindestens eine Klemmelement eine vorzugsweise randseitig angeordnete Gleitschräge zur Einführung eines Kabels in den Durchführkanal auf, wobei die Gleitschräge vorzugsweise eine der Führungsachse entgegengesetzte Neigung zu der Durchführachse aufweist. Die Gleitschräge ist vorzugsweise als Teilfläche eines Trichters ausgebildet. Mittels der Gleitschräge wird ein besonders einfaches und komfortables Einführen eines Kabels in den Durchführkanal ermöglicht, indem das freie Ende eines durchzuführenden Kabels auf die Gleitschräge trifft und das Klemmelement in radialer Richtung nach außen (entgegen der Wirkung der Kraftbeaufschlagungseinrichtung) drückt. Dies vereinfacht insbesondere die Montage von Kabeln mit größeren Durchmessern.

Bei einer besonders bevorzugten Ausführungsform sind mehrere Klemmelemente vorgesehen, welche vorzugsweise über den Umfang des Durchführkanals regelmäßig verteilt angeordnet sind. Je mehr Klemmelemente bereitgestellt werden, desto gleichmäßiger kann eine zur Zugentlastung erforderliche Klemmkraft auf das Kabel ausgeübt werden. Darüber hinaus ist eine regelmäßige Anordnung der Klemmelemente über den Umfang des Durchführkanals für eine gleichmäßige Verteilung der Klemmkraft vorteilhaft. Ferner führt eine symmetrische Anordnung der Klemmelemente dazu, dass ein durch den Durchführkanal durchgeführtes Kabel stets eine mittige Position bezüglich des Durchführkanals einnimmt. Im Rahmen der Erfindung können beispielsweise 2 Klemmelemente vorgesehen sein. Bevorzugt ist jedoch die Verwendung von insbesondere 3 oder 4 Klemmelementen. Es kann aber auch eine höhere Anzahl von Klemmelementen vorgesehen sein.

Bei einer weiteren bevorzugten Ausführungsform weist die Kraftbeaufschlagungseinrichtung mindestens eine Feder, vorzugsweise in Form einer Druckfeder, auf, wobei mindestens eine Komponente einer von der mindestens einen Feder ausgeübten Federkraft entlang der Führungsachse wirksam ist und das mindestens eine Klemmelement in Richtung seiner Klemmstellung beaufschlagt. Die Federkraft entspricht also der Antriebskraft der Kraftbeaufschlagungseinrichtung. Dies ermöglicht es, auf besonders einfache, kostengünstige und zugleich zuverlässige Weise das Klemmelement in Richtung seiner Klemmstellung mit Kraft zu beaufschlagen.

Es ist denkbar, dass für jedes einer Mehrzahl von Klemmelementen eine separate Feder vorgesehen ist, welche im Bereich oder benachbart zu der jeweiligen Führungseinrichtung eines jeweiligen Klemmelements angeordnet ist und insbesondere parallel zu der jeweiligen Führungsachse ausgerichtet sein kann. Bevorzugt ist es jedoch, wenn nur eine einzige Druckfeder vorgesehen ist, welche parallel zu der Durchführachse ausgerichtet ist und sich mit einem Ende an dem Gehäuse abstützt und mit dem anderen Ende an dem mindestens einen Klemmelement abstützt. Hierdurch wird ein besonders einfacher und robuster Aufbau ermöglicht. Insbesondere für den Fall, dass mehrere Klemmelemente vorgesehen sind, hat eine solche Ausgestaltung den Vorteil, dass auf die Klemmelemente jeweils die gleiche Kraft (nämlich die von der Feder erzeugte Druckkraft geteilt durch die Anzahl der Klemmelemente) wirkt. Dies hat zur Folge, dass die von den unterschiedlichen Klemmelementen auf ein durchgeführtes Kabel ausgeübten Klemmkräfte ebenfalls identisch hoch sind.

Erfindungsgemäß ist eine handbetätigbare Freigabeeinrichtung vorgesehen, mittels welcher das mindestens eine Klemmelement aus seiner Klemmstellung in seine Freigabestellung überführbar ist. Dies ermöglicht es, die Klemmwirkung des mindestens einen Klemmelements aufzuheben, vorzugsweise ohne dass hierfür ein zusätzliches Werkzeug erforderlich ist. Ein bereits montiertes Kabel kann somit auf besonders einfache Weise aus der Kabeldurchführungseinrichtung wieder entfernt werden.

Ferner ist es bevorzugt, wenn die Freigabeeinrichtung ein Betätigungselement aufweist, wobei mindestens eine Komponente einer durch eine Betätigung des Betätigungselements auf das mindestens eine Klemmelement ausgeübten Betätigungskraft entlang der Führungsachse wirksam ist und das mindestens eine Klemmelement in Richtung seiner Freigabestellung beaufschlagt. Bei der Überführung des Betätigungselements aus seiner Ruhestellung in seine Betätigungsstellung wird das mindestens eine Klemmelement aus einer Klemmstellung in eine Freigabestellung überführt. Dies ermöglicht es, lediglich durch eine Betätigung des Betätigungselements das mindestens eine Klemmelement aus einer das durchgeführte Kabel klemmenden Stellung in eine das Kabel freigebende Stellung zu überführen. Somit kann auf besonders komfortable und sichere Weise eine Klemmwirkung des mindestens einen Klemmelements aufgehoben werden.

Ferner ist es bevorzugt, wenn das Betätigungselement entlang eines Betätigungswegs zwischen einer Ruhestellung und einer Betätigungsstellung bewegbar an dem Gehäuse gelagert ist und wenn die Betätigungskraft durch oder bei Überführung aus der Ruhestellung in die Betätigungsstellung erzeugbar ist. Durch die Lagerung des Betätigungselements an dem Gehäuse wird eine besonders stabile Anordnung ermöglicht, sodass eine sichere Funktion des Betätigungselements gewährleistet ist.

Bei einer weiteren bevorzugten Ausführungsform ist das Betätigungselement an dem Gehäuse drehbar gelagert und um die Durchführachse des Gehäuses verdrehbar. Besonders bevorzugt ist es, wenn mittels einer solchen Drehbewegung des Betätigungselements das Klemmelement aus seiner Klemmstellung in seine Freigabestellung überführbar ist. Dies ermöglicht eine einfache und intuitive Bedienung der Freigabeeinrichtung. Eine solche Drehung erfolgt vorzugsweise von Hand, indem das Betätigungselement ergriffen und verdreht wird. Es ist aber auch möglich, dass das Betätigungselement eine Werkzeugangriffsfläche aufweist, beispielsweise für einen Gabelschlüssel, mittels welchem das Betätigungselement zusätzlich oder alternativ zu einer Handbetätigung betätigbar ist.

Ferner ist es bevorzugt, wenn das Betätigungselement eine Durchführöffnung zur Durchführung eines Kabels aufweist, wobei im Bereich der Durchführöffnung eine Dichtungsmembran zur Abdichtung eines durchgeführten Kabels vorgesehen ist. Durch die Dichtungsmembran wird sichergestellt, dass die Funktionen der Freigabeeinrichtung und/oder der Zugentlastungseinrichtung nicht durch Verunreinigungen, bspw. durch Staub und/oder durch Wasser, beeinträchtigt werden. Bevorzugt ist es, wenn die Dichtungsmembran aus einem Elastomermaterial und/oder aus einem gummierten Gewebe hergestellt ist.

Bei einer weiteren bevorzugten Ausführungsform ist eine am Gehäuse angeordnete Dichteinrichtung zur Abdichtung eines durch das Gehäuse hindurchgeführten Kabels vorgesehen. Dies hat den Vorteil, dass eine Wand auch im Bereich einer zur Durchführung eines Kabels bestimmten Öffnung sicher abgedichtet werden kann und somit eine hohe IP-Schutzart erreicht werden kann.

Ferner ist es bevorzugt, wenn die Dichteinrichtung mindestens einen sich konisch verjüngenden Dichtkörper aufweist. Hierdurch wird sichergestellt, dass Kabel mit unterschiedlichen Durchmessern sicher abgedichtet werden können. Besonders bevorzugt ist es, wenn der Dichtkörper aus einem elastischen Material, beispielsweise einem Elastomer, hergestellt ist. Insbesondere ist es bevorzugt, wenn der Dichtkörper an einem Versteifungselement abgestützt ist, das aus einem thermoplastischen Material hergestellt ist.

Bei einer weiteren bevorzugten Ausführungsform weist das Gehäuse einen Befestigungskörper zur Befestigung an der Wand und einen mit dem Befestigungskörper verbindbaren, vorzugsweise verschraubbaren, Gehäusekörper auf. Durch den zweiteiligen Aufbau wird eine besonders einfache Herstellung und Montage der Kabeldurchführungseinrichtung begünstigt. Ferner wird ein flexibler Einsatz der Kabeldurchführungseinrichtung ermöglicht. Beispielsweise ist es denkbar, dass verschiedenartige Befestigungskörper für unterschiedliche Wandöffnungen und/oder mit unterschiedlichen Befestigungsmitteln vorgehalten werden, welche dann mit einem standardisierten Gehäusekörper zu einer Baugruppe zusammengefügt werden.

Weitere Merkmale und Vorteile der Erfindung sind Gegenstand der nachfolgenden Beschreibung und der zeichnerischen Darstellung eines bevorzugten Ausführungsbeispiels.

In der Zeichnung zeigen
- Fig. 1: eine perspektivische Ansicht einer Ausführungsform einer Kabeldurchführungseinrichtung;
- Fig. 2: eine Schnittdarstellung der Kabeldurchführungseinrichtung gemäß Fig. 1 längs einer vertikalen Schnittebene, wobei ein Betätigungselement in seiner Ruhestellung dargestellt ist;
- Fig. 3: eine der Fig. 2 entsprechende Ansicht, mit einem durchgeführten Kabel;
- Fig. 4: eine der Fig. 2 entsprechende Ansicht, wobei das Betätigungselement in seiner Betätigungsstellung dargestellt ist; und
- Fig. 5: eine der Fig. 3 entsprechende Ansicht, wobei das Betätigungselement in seiner Betätigungsstellung dargestellt ist.

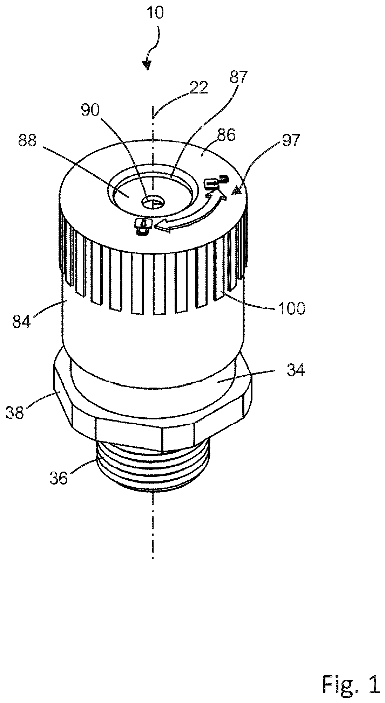

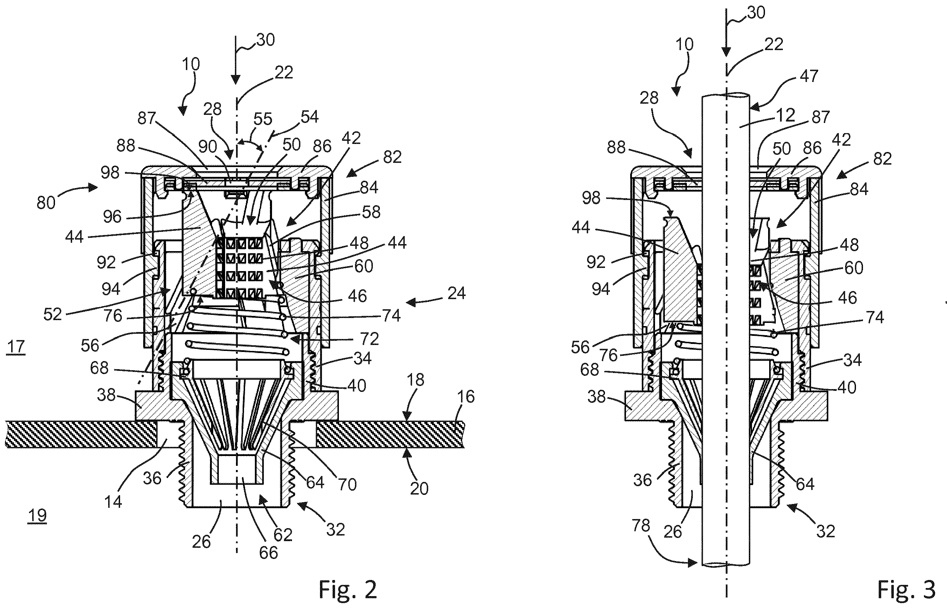

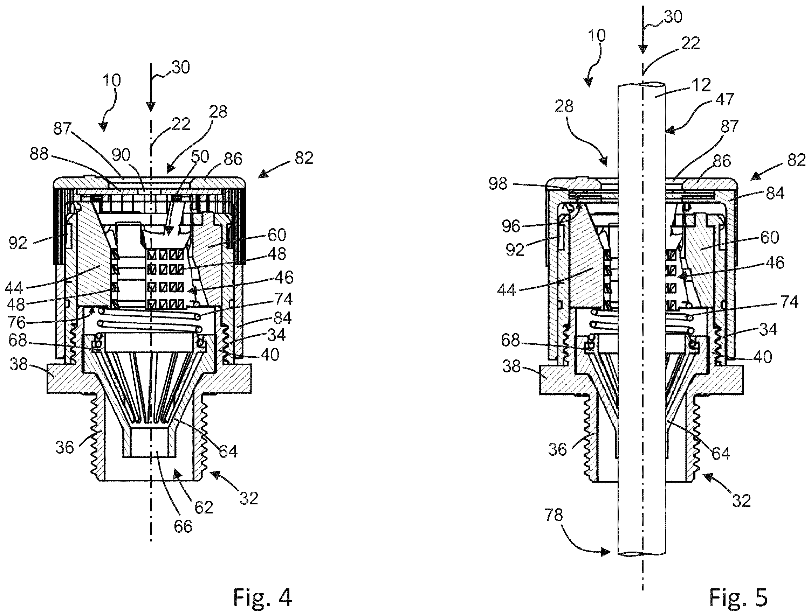

In Figur 1 ist eine Kabeldurchführungseinrichtung dargestellt, die insgesamt mit dem Bezugszeichen 10 bezeichnet ist. Die Kabeldurchführungseinrichtung 10 dient zur Durchführung eines in den Figuren 3 und 5 dargestellten Kabels 12 durch eine Öffnung 14 in einer Wand 16 (vergleiche Fig. 2). Bei der Öffnung 14 kann es sich beispielsweise um eine Öffnung 14 in einer Gehäusewand eines elektrischen Schaltschranks oder eines elektrischen Geräts handeln.

Die Wand 16 weist eine (bspw. einer Umgebung 17 eines Schaltschranks zugewandte) Außenseite 18 und eine (bspw. einem Innenraum 19 eines Schaltschranks zugewandte) Innenseite 20 auf (vergleiche Fig. 2). Im Sinne der vorliegenden Erfindung ist mit der Außenseite 18 diejenige Seite der Wand 16 gemeint, von welcher aus die Kabeldurchführungseinrichtung 10 an der Wand 16 montiert wird.

Die Kabeldurchführungseinrichtung 10 erstreckt sich längs einer zentralen Durchführachse 22, welche im montierten Zustand der Kabeldurchführungseinrichtung 10 senkrecht zur Außenseite 18 der Wand 16 orientiert ist.

Die Kabelverschraubung 10 umfasst ein Gehäuse 24, welches sich im Wesentlichen konzentrisch um die Durchführachse 22 erstreckt. Das Gehäuse 24 begrenzt einen zentralen Innenraum 26, durch welchen das Kabel 12 entlang eines zu der Durchführachse 22 parallelen Durchführkanals 28 durchführbar oder durchgeführt ist (vergleiche Fig. 3). Eine zu der Durchführachse 22 koaxiale Durchführrichtung 30 des Kabels weist dabei von der Außenseite 18 der Wand 16 in Richtung auf die Innenseite 20 der Wand 16 (siehe Pfeil 30 in den Figuren 2 bis 5).
Das Gehäuse 24 weist einen Befestigungskörper 32 und einen Gehäusekörper 34 auf (vergleiche Fig. 2). Der Befestigungskörper 32 dient zur Befestigung an der Wand 16. Der Befestigungskörper 32 weist einen ersten Stutzen 36 zur Einführung in die Öffnung 14 der Wand 16 auf. An den ersten Stutzen 36 schließt sich ein Gehäusevorsprung 38 an, der zur Anlage an der Außenseite 18 der Wand 16 dient. Der erste Stutzen 36 kann in an sich bekannter Weise an der Wand 16 befestigt werden. Beispielsweise kann ein in den Innenraum 19 eines Schaltschranks ragender Teil des ersten Stutzens 36 mit einer (in der Zeichnung nicht dargestellten) Kontermutter verschraubt werden. Es ist auch eine Befestigung durch Verrastung möglich (unter Verwendung von an dem ersten Stutzen angeordneten, in der Zeichnung nicht dargestellten Rastelementen.

Der Befestigungskörper 32 umfasst ferner einen zweiten Stutzen 40, der mit dem ersten Stutzen 36 mittels einer Verschraubung verbunden ist. Beispielsweise weist der zweite Stutzen 40 ein Außengewinde auf, das mit einem Innengewinde des Gehäusekörpers 34 verschraubbar ist.

Die Kabeldurchführungseinrichtung 10 weist ferner eine Zugentlastungseinrichtung 42 auf, welche verhindert, dass ein durchgeführtes Kabel 12 entgegen der Durchführrichtung 30 bewegt werden kann, wodurch eine endseitige elektrische Verbindung des Kabels mit elektrischen Bauteilen einer Zugbelastung ausgesetzt wäre. Die Zugentlastungseinrichtung 42 weist drei Klemmelemente 44 auf, welche - in einem Winkel von 120° zueinander winkelversetzt - über den Umfang der Kabeldurchführungseinrichtung 10 verteilt angeordnet sind (in den Schnittdarstellungen der Figuren 2 bis 5 sind lediglich zwei Klemmelemente dargestellt). Die Klemmelemente 44 sind vorzugsweise zueinander identisch ausgebildet.

Die Klemmelemente 44 weisen jeweils eine Klemmfläche 46 zur Anlage an die Mantelfläche 47 eines in dem Durchführkanal 28 angeordneten Kabels 12 auf. Die Klemmfläche 46 eines jeweiligen Klemmelements 44 erstreckt sich parallel zu der Durchführachse 22 und ist teilzylindrisch mit einer bezogen auf die Durchführachse 22 konkaven Krümmung ausgebildet. Die Klemmflächen 46 weisen jeweils eine Mehrzahl von Klemmnoppen 48 auf, welche vorzugsweise regelmäßig über die jeweilige Klemmfläche 46 verteilt angeordnet sind. Die Klemmnoppen 48 dienen zur Anlage an die Mantelfläche 47, die bspw. durch die außenseitige Isolierung eines durchgeführten Kabels 12 gebildet ist. Die effektive Kontaktfläche zwischen einem Klemmelement 44 und einem durchgeführten Kabel 12 ist von dem Durchmesser des Kabels 12 und von der zwischen der Klemmfläche 46 und dem Kabel 12 wirkenden Klemmkraft abhängig; für ein Kabel 12, dessen Mantelfläche 47 einen zu dem Krümmungsradius der Klemmflächen 46 identischen Radius aufweist, ist die effektive Klemmfläche maximal.

Die Klemmelemente 44 weisen jeweils an einem dem Befestigungskörper 32 abgewandten Randbereich eine Gleitschräge 50 auf. Die Gleitschrägen 50 sind jeweils bezogen auf die Durchführachse 22 geneigt (bspw. um einen Neigungswinkel von ca. 20° bis ca. 70°) und verjüngen sich in Durchführrichtung 30 gesehen in Richtung auf die Durchführachse 22. Die Gleitschrägen 50 der jeweiligen Klemmelemente 44 bilden gemeinsam einen trichterförmigen Führungsabschnitt zur Einführung eines Kabels 12 in den Durchführkanal 28 (vergleiche Fig. 2 und Fig. 3).

Die Kabeldurchführungseinrichtung 10 weist ferner eine Führungseinrichtung 52 auf, mittels welcher ein jeweiliges Klemmelement 44 entlang einer Führungsachse 54 verschiebbar an dem Gehäuse 24, vorzugsweise an dem Gehäusekörper 34, gelagert ist (vergleiche Fig. 2). Die Führungseinrichtung 52 weist an dem Gehäusekörper 34 vorgesehene, insbesondere nutförmige Führungsflächen 56 auf, welche mit korrespondierenden, insbesondere nutensteinförmigen Führungsabschnitten 58 der Klemmelemente 44 zusammenwirken. Die Führungsflächen 56 können von Führungselementen 60 gebildet sein, welche separat vom Gehäuse 24 bereitgestellt sind und im Innenraum 26 des Gehäuses 24, vorzugsweise an dem Gehäusekörper 34, befestigt sind. Es ist auch möglich, dass die Führungsflächen 56 mit dem Gehäusekörper 34 einstückig ausgebildet sind. Die Führungsabschnitte 58 der Klemmelemente 44 sind in radialer Richtung gesehen auf der der Klemmfläche 46 abgewandten Seite der Klemmelemente 44 angeordnet.

Die Führungsflächen 56 und die korrespondierenden Führungsabschnitte 58 erstrecken sich parallel zu der Führungsachse 54. Die Führungsachse 54 weist eine Neigung relativ zu der Durchführachse 22 auf. Die Führungsachse 54 und die Durchführachse 22 schließen einen spitzen Winkel 55 ein. Dieser beträgt vorzugsweise ca. 20° bis ca. 25°, beispielweise 22,5°. Aufgrund der Neigung der Führungsachse 54 führt eine Verschiebung eines Klemmelements 44 entlang der Führungsachse 54 nicht nur zu einer Verschiebung in axialer Richtung (entlang der Durchführachse 22), sondern auch zu einer Verschiebung in radialer Richtung (bezogen auf die Durchführachse 22). In Durchführrichtung 30 gesehen weist die Führungsachse 54 von der Durchführachse 22 weg. Eine Verschiebung eines Klemmelements 44 in Durchführrichtung 30 führt somit zu einer Verschiebung des Klemmelements 44 nach radial außen (also von der Durchführachse 22 weg).

Die Führungseinrichtung 52 weist vorzugsweise Anschläge auf, welche einen maximalen Verstellweg der Klemmelemente 44 entlang der Führungsachse 54 begrenzen und somit zwei Endstellungen definieren. In einer ersten Endstellung (maximale Klemmstellung) befindet sich das jeweilige Klemmelement 44 in seiner bezogen auf die Durchführachse 22 radial innersten Position und somit axial in seiner von dem Befestigungskörper 32 maximal beabstandeten Position (vergleiche Fig. 2). Der Durchführkanal 28 ist in dieser Stellung durch die Klemmelemente 44 radial verjüngt. In einer zweiten Endstellung (maximale Freigabestellung) befindet sich das jeweilige Klemmelement 44 in seiner bezogen auf die Durchführachse 22 radial äußersten Position und axial in seiner zu dem Befestigungskörper 32 minimal beabstandeten Position (vgl. Fig. 4). In der Freigabestellung ist der Durchführkanal 28 freigegeben, sodass ein Kabel 12 durchgeführt werden kann. Zwischen den beiden Endstellungen können die Klemmelemente 44 in Abhängigkeit des Durchmessers eines durchgeführten Kabels 12 weitere Klemm- bzw. Freigabestellungen einnehmen (siehe unten) .

Die Kabeldurchführungseinrichtung 10 weist ferner eine Dichteinrichtung 62 zur Abdichtung eines durch das Gehäuse 24 hindurchgeführten Kabels 12 auf. Die Dichteinrichtung 62 weist einen Dichtkörper 64 auf. Der Dichtkörper 64 ist in dem Innenraum 26 des Gehäuses 24 angeordnet und stützt sich an dem Befestigungskörper 32 ab. Der Dichtkörper 64 ist als Konus ausgebildet, welcher zur Durchführachse 22 konzentrisch ausgebildet ist und sich in Durchführrichtung 30 verjüngt. Der Dichtkörper 64 geht in seinem verjüngten Bereich in einen zur Durchführachse 22 parallelen konzentrischen Hohlzylinder über, der eine Durchtrittsöffnung 66 zur Durchführung des Kabels 12 umgrenzt.

Der Dichtkörper 64 ist vorzugsweise aus einem Elastomer gefertigt. Bei einer Durchführung eines Kabels 12 entlang der Durchführrichtung 30 weitet sich die Durchtrittsöffnung 66 elastisch auf und legt sich dichtend an das Kabel 12 an (vgl. Fig. 3 und Fig. 5). Somit kann eine hohe Dichtwirkung (IP-Schutzart) erzielt werden.

Die Dichteinrichtung 62 weist ferner ein vorzugsweise aus einem thermoplastischen Material hergestelltes Versteifungselement 68 zur Abstützung des Dichtkörpers 64 auf. Das Versteifungselement 68 ist im Inneren des Dichtkörpers 64 angeordnet. Das Versteifungselement 68 weist eine Mehrzahl von über den Umfang regelmäßig verteilt angeordneter Stege 70 auf, die sich parallel zu einer Innenwand des Dichtkörpers 64 in Durchführrichtung 30 konisch auf die Durchführachse 22 zu erstrecken.

Die Kabeldurchführungseinrichtung 10 weist ferner eine Kraftbeaufschlagungseinrichtung 72 zur Erzeugung einer Antriebskraft auf. Die Kraftbeaufschlagungseinrichtung 72 weist eine Feder 74 auf, die vorzugsweise als Druckfeder ausgebildet ist. Die Feder 74 ist in dem Innenraum 26 des Gehäuses 24 angeordnet und erstreckt sich parallel zu der Durchführachse 22. Die Feder 74 stützt sich mit einem ersten Ende an dem Versteifungselement 68 der Dichteinrichtung 62 ab, welche sich wiederum an dem Befestigungskörper 32 abstützt. Es ist auch möglich, dass sich die Feder 74 mit einem ersten Ende an dem Befestigungskörper 32 des Gehäuses 24 abstützt. Ein entgegengesetztes Ende der Feder 74 stützt sich an einer dem Befestigungskörper 32 zugewandten Abstützfläche 76 des jeweiligen Klemmelements 44 ab. Die Abstützfläche erstreckt sich vorzugsweise senkrecht oder im Wesentlichen senkrecht zu der Durchführachse 22.

Die Feder 74 übt eine Antriebskraft (Federkraft) entlang der Durchführachse 22 und entgegen der Durchführrichtung 30 auf die Klemmelemente 44 aus, wodurch diese entlang der Führungsachse 54 in Richtung ihrer Klemmstellung gedrückt werden. Ist kein Kabel 12 durch den Durchführkanal 28 hindurchgeführt, nehmen die Klemmelemente 44 eine (maximale) Klemmstellung ein. Figur 2 zeigt einen solchen Ausgangszustand ohne durchgeführtes Kabel 12. In diesem Zustand ist der Durchführkanal 28 durch die Klemmelemente 44 maximal verjüngt.

Beim Einführen eines Kabels 12 in den Durchführkanal 28 entlang der Durchführrichtung 30 gelangt das Kabel 12 zunächst mit seinem freien Ende 78 in Anlage mit den Gleitschrägen 50 der Klemmelemente 44. Eine hierbei von dem Kabel 12 auf die Gleitschrägen 50 ausgeübte Montagekraft wird in Richtung der Führungsachsen 54 umgelenkt und wirkt der Antriebskraft der Kraftbeaufschlagungseinrichtung 72 entgegen. Sobald die entlang der Führungsachsen 54 wirksame Montagekraft die entlang der Führungsachse 54 wirksame Antriebskraft überschreitet, werden die Klemmelemente 44 aus ihrer Klemmstellung heraus in Richtung ihrer Freigabestellung bewegt. Die Klemmelemente 44 werden dabei auch nach radial außen bewegt, wodurch sich der Durchführkanal 28 aufweitet. Nach Erreichen einer Öffnungsweite des Durchführkanals 28, welche dem Durchmesser des Kabels 12 entspricht, gleitet das Kabel parallel zu den Klemmflächen 46 entlang der Durchführachse 22 durch den Durchführkanal 28 (vergleiche Fig. 3).

Der maximale Verstellweg der Klemmelemente 44 in radialer Richtung bestimmt den Klemmbereich, innerhalb welchem Kabel 12 mit unterschiedlichen Kabeldurchmessern verwendbar sind.

Da die Klemmelemente 44 durch die Kraftbeaufschlagungseinrichtung 72 permanent in Richtung ihrer Klemmstellung (also in Richtung ihrer radial innersten Position) kraftbeaufschlagt sind, sind die Klemmelemente 44 permanent nach radial innen kraftbeaufschlagt. Die Klemmelemente 44 stehen folglich stets in Kontakt mit dem durchgeführten Kabel 12 und üben stets über ihre Klemmflächen 46 eine nach radial innen wirkende Klemmkraft auf das Kabel 12 aus (vergleiche Fig. 3) .

Die Klemmkraft und die damit einhergehende Haftwirkung zwischen den Klemmelementen 44 und dem Kabel 12 führen dazu, dass die Klemmelemente 44 bei einem Zurückziehen des Kabels 12 entgegen der Durchführrichtung 30 mit dem Kabel 12 mitgeführt werden und dabei entlang der Führungsachse 54 in Richtung ihrer Klemmstellung bewegt werden. Die Klemmelemente werden dabei immer weiter nach radial innen bewegt. Der Durchführkanal 28 wird also immer weiter eingeengt, und es wird eine immer größer werdende radiale Klemmkraft auf das Kabel 12 ausgeübt. Hierdurch wird eine Selbsthemmung des Kabels 12 bewirkt und somit eine hohe Zugentlastungswirkung erzielt. Das Kabel 12 kann also nicht entgegen der Durchführrichtung 30 aus der Kabeldurchführungseinrichtung 10 entfernt werden; die Klemmelemente 44 und die Mantelfläche 47 des Kabels 12 werden miteinander "verkeilt".

Um die Zugentlastungswirkung wieder aufheben zu können, weist die Kabeldurchführungseinrichtung 10 eine Freigabeeinrichtung 80 auf, mittels welcher die Klemmelemente 44 aus einer ein durchgeführtes Kabel 12 klemmenden Stellung in eine das Kabel 12 freigebende Stellung überführt werden können. Die Freigabeeinrichtung 80 weist ein Betätigungselement 82 auf. Das Betätigungselement 82 weist einen zylindrischen Hauptkörper 84 auf, der sich konzentrisch zu der Durchführachse 22 erstreckt. Das Betätigungselement 82 weist ferner eine Abdeckung 86 auf, die an einer Stirnseite des Hauptkörpers 86 angeordnet ist. Der Hauptkörper 84 und die Abdeckung 86 sind miteinander einstückig ausgebildet oder separat voneinander bereitgestellt und miteinander verbunden, beispielsweise mittels einer Rastverbindung. Die Abdeckung 86 weist eine zentrale Aussparung 87 auf.

Das Betätigungselement 82 weist im Bereich der Aussparung 87 eine Dichtungsmembran 88 auf, welche ihrerseits eine Durchführöffnung 90 zur Durchführung eines Kabels 12 aufweist. Die Dichtungsmembran 88 ist vorzugsweise aus einem gummierten Gewebe hergestellt. Der Durchmesser der Durchführöffnung 90 ist vorzugsweise kleiner als der Durchmesser eines dünnsten durchzuführenden Kabels 12. Bei der Durchführung eines Kabels 12 weitet sich die Durchführöffnung 90 elastisch auf und legt sich mit ihrem Rand dichtend an das Kabel 12 an.

Das Betätigungselement 82 ist an dem Gehäuse 24 angeordnet und überfängt mit seinem zylindrischen Hauptkörper 84 zumindest teilweise den Gehäusekörper 34. Das Betätigungselement 82 ist in einer an der Außenseite des Gehäusekörpers 34 angeordneten Kulisse 92 geführt, deren Kulissenbahn sich wendelförmig über den Umfang des Gehäusekörpers 34 hinweg erstreckt. Das Betätigungselement 82 weist mindestens einen Lagerabschnitt 84 auf, beispielsweise zwei Lagerabschnitte 94, die an zwei einander gegenüberliegenden Seite der Innenwand seines Hauptkörpers 84 angeordnet sind. Der mindestens eines Lagerabschnitt 84 greift in die Kulissenbahn der Kulisse 92 ein und ist dort geführt (vergleiche Fig. 2).

Aufgrund der Wendelform der Kulissenbahn führt das Betätigungselement 82 bei einer Bewegung entlang der Kulissenbahn nicht nur eine Drehbewegung um die Durchführachse 22 aus, sondern bewegt sich gleichzeitig auch in axialer Richtung parallel zu der Durchführachse 22. Die Kulisse 92 weist vorzugsweise Anschläge auf, welche einen maximalen Verstellweg des Betätigungselements 82 entlang der Kulissenbahn begrenzen und somit zwei Endstellungen definieren. In einer ersten Endstellung (Ruhestellung) ist das Betätigungselement 82 in axialer Richtung maximal von dem Befestigungskörper 32 beabstandet (vergleiche Fig. 2 und Fig. 3). In einer zweiten Endstellung (Betätigungsstellung) ist das Betätigungselement 82 in axialer Richtung minimal von dem Befestigungskörper 32 beabstandet (vergleiche Fig. 4 und Fig. 5).

Das Betätigungselement 82, insbesondere dessen Abdeckung 86, weist ferner eine den Klemmelementen 44 zugewandte Kontaktfläche 96 auf, die mit einem der Kontaktfläche 96 zugewandten Kontaktabschnitt 98 des jeweiligen Klemmelements 44 zusammenwirken kann, sobald die Kontaktfläche 96 den oder die Kontaktabschnitte 98 berührt. Bei einer Drehbewegung des Betätigungselements 82 in Richtung seiner Betätigungsstellung und der damit einhergehenden axialen Bewegung in Durchführrichtung 30, gelangt das Betätigungselement 82 über seine Kontaktfläche 96 in Anlage mit dem Kontaktabschnitt 98 eines jeweiligen Klemmelements 44. In Folge dessen werden die Klemmelemente 44 in Durchführrichtung 30 mit einer Betätigungskraft beaufschlagt. Ist die Betätigungskraft größer als die entgegenwirkende Antriebskraft der Kraftbeaufschlagungseinrichtung 72, bewegen sich die Klemmelemente 44 in Richtung ihrer Freigabestellung. Dabei werden die Klemmelemente 44 nach radial außen bewegt, sodass die Klemmwirkung auf ein durchgeführtes Kabel 12 aufgehoben wird (vgl. Fig. 4 und 5). Auf diese Weise lösen sich die Klemmflächen 46 von der Mantelfläche 47 des Kabels 12, und das freigegebene Kabel 12 kann widerstandslos längs der Durchführachse 22 bewegt und ggf. auch vollständig entfernt werden.

Ein Monteur muss also lediglich eine Drehbewegung auf das Betätigungselement 82 ausüben, um die Zugentlastungswirkung aufzuheben. Vorzugsweise weist die Abdeckung 86 eine entsprechende Markierung 97 auf, welche die Bewegbarkeit des Betätigungselements 82 zwischen dessen Ruhestellung und dessen (maximaler) Betätigungsstellung visualisiert, vgl. Fig. 1. Wie weit das Betätigungselement 82 in Richtung auf seine (maximale) Betätigungsstellung verdreht werden muss, um eine Zugentlastungswirkung aufzuheben, ist von dem Durchmesser des durchgeführten Kabels 12 abhängig. Beispielsweise ist es bei dünneren Kabeln 12 möglich, dass eine Freigabe des Kabels 12 bereits vor Erreichen der (maximalen) Betätigungsstellung des Betätigungselements 82 erfolgt. In jedem Fall kann das Betätigungselement 82 aber unabhängig von dem jeweiligen Durchmesser eines Kabels 12 in seine maximale Betätigungsstellung verbracht werden, um den Durchführkanal 28 maximal aufzuweiten und ein Kabel 12 längs der Durchführachse 22 bewegen zu können.

Der maximale Verstellweg des Betätigungselements 82 in axialer Richtung (also der Verstellweg zwischen seiner Ruhestellung und seiner Betätigungsstellung) ist vorzugsweise so gewählt, dass er dem maximalen Verstellweg der Klemmelemente 44 in axialer Richtung (also dem Verstellweg zwischen der maximalen Klemmstellung und der maximalen Freigabestellung) entspricht.

Die Betätigung des Betätigungselements 82 erfolgt bevorzugt von Hand. Zur sicheren Betätigung weist das Betätigungselement 82 auf der Außenfläche seines Hauptkörpers eine geriffelte Angriffsfläche 100 auf (vergleiche Fig. 1). Darüber hinaus ist es auch möglich, dass das Betätigungselement 82 eine Werkzeugangriffsfläche, bspw. für einen Gabelschlüssel aufweist.

## Patentansprüche

1. Kabeldurchführungseinrichtung (10) zur Durchführung eines Kabels (12) durch eine Öffnung (14) in einer Wand (16), mit einem im Bereich der Öffnung (14) befestigbaren Gehäuse (24), wobei das Kabel (12) entlang eines zu einer Durchführachse (22) parallelen Durchführkanals (28) durch das Gehäuse (24) hindurch durchführbar ist, mit einer Zugentlastungseinrichtung (42), welche mindestens ein Klemmelement (44) zur Anlage an ein durch den Durchführkanal (28) durchgeführtes Kabel (12) aufweist, wobei das mindestens eine Klemmelement (44) mittels einer Führungseinrichtung (52) entlang einer zu der Durchführachse (22) geneigten Führungsachse (54) verschiebbar an dem Gehäuse (24) gelagert ist und zwischen einer den Durchführkanal (28) radial verjüngenden Klemmstellung und einer den Durchführkanal (28) freigebenden Freigabestellung überführbar ist, und wobei eine Kraftbeaufschlagungseinrichtung (72) zur Erzeugung einer Antriebskraft vorgesehen ist, welche mit mindestens einer Kraftkomponente entlang der Führungsachse (54) wirksam ist und das mindestens eine Klemmelement (44) in Richtung seiner Klemmstellung beaufschlagt, **dadurch gekennzeichnet, dass** eine handbetätigbare Freigabeeinrichtung (80) vorgesehen ist, mittels welcher das mindestens eine Klemmelement (44) aus seiner Klemmstellung in seine Freigabestellung überführbar ist.

2. Kabeldurchführungseinrichtung (10) nach Anspruch 1, **dadurch gekennzeichnet, dass** die Durchführachse (22) mit der Führungsachse (54) einen spitzen Winkel (55) einschließt, vorzugsweise einen Winkel (55) zwischen 5° und 45°, insbesondere einen Winkel (55) zwischen 15° und 30°.

3. Kabeldurchführungseinrichtung (10) nach einem der voranstehenden Ansprüche, **dadurch gekennzeichnet, dass** das mindestens eine Klemmelement (44) eine Klemmfläche (46) zur Anlage an ein durchgeführtes Kabel (12) aufweist, wobei sich die Klemmfläche (46) vollständig oder zumindest mit einem Teilabschnitt parallel zu der Durchführachse (22) erstreckt.

4. Kabeldurchführungseinrichtung (10) nach Anspruch 3, **dadurch gekennzeichnet, dass** die Klemmfläche (46) eine Oberflächenstrukturierung zur Verbesserung der Haftung zwischen der Klemmfläche (46) und einem durchgeführten Kabel (12) aufweist, vorzugsweise in Form einer Mehrzahl von über die Klemmfläche (46) verteilt angeordneter Klemmnoppen (48).

5. Kabeldurchführungseinrichtung (10) nach einem der voranstehenden Ansprüche, **dadurch gekennzeichnet, dass** das mindestens eine Klemmelement (44) eine vorzugsweise randseitig angeordnete Gleitschräge (50) zur Einführung eines Kabels (12) in den Durchführkanal (28) aufweist, wobei die Gleitschräge (50) vorzugsweise eine der Führungsachse (54) entgegengesetzte Neigung zu der Durchführachse (22) aufweist.

6. Kabeldurchführungseinrichtung (10) nach einem der voranstehenden Ansprüche, **dadurch gekennzeichnet, dass** mehrere Klemmelemente (44) vorgesehen sind, welche vorzugsweise über den Umfang des Durchführkanals (28) regelmäßig verteilt angeordnet sind.

7. Kabeldurchführungseinrichtung (10) nach einem der voranstehenden Ansprüche, **dadurch gekennzeichnet, dass** die Kraftbeaufschlagungseinrichtung (72) mindestens eine Feder (74), vorzugsweise in Form einer Druckfeder, aufweist.

8. Kabeldurchführungseinrichtung (10) nach einem der voranstehenden Ansprüche, **dadurch gekennzeichnet, dass** die Freigabeeinrichtung (80) ein Betätigungselement (82) aufweist, wobei mindestens eine Komponente einer durch eine Betätigung des Betätigungselements (82) auf das mindestens eine Klemmelement (44) ausgeübten Betätigungskraft entlang der Führungsachse (54) wirksam ist und das mindestens eine Klemmelement (44) in Richtung seiner Freigabestellung beaufschlagt.

9. Kabeldurchführungseinrichtung (10) nach Anspruch 8, **dadurch gekennzeichnet, dass** das Betätigungselement (82) entlang eines Betätigungswegs zwischen einer Ruhestellung und einer Betätigungsstellung bewegbar an dem Gehäuse (24) gelagert ist und dass die Betätigungskraft durch oder bei Überführung aus der Ruhestellung in die Betätigungsstellung erzeugbar ist.

10. Kabeldurchführungseinrichtung (10) nach einem der voranstehenden Ansprüche, **dadurch gekennzeichnet, dass** das Betätigungselement (82) an dem Gehäuse (24) drehbar gelagert und um die Durchführachse (22) des Gehäuses (24) verdrehbar ist.

11. Kabeldurchführungseinrichtung (10) nach einem der Ansprüche 8 bis 10, **dadurch gekennzeichnet, dass** das Betätigungselement (82) eine Durchführöffnung (90) zur Durchführung eines Kabels (12) aufweist, wobei im Bereich der Durchführöffnung (90) eine Dichtungsmembran (88) zur Abdichtung eines durchgeführten Kabels (12) vorgesehen ist.

12. Kabeldurchführungseinrichtung (10) nach einem der voranstehenden Ansprüche, **dadurch gekennzeichnet, dass** eine am Gehäuse (24) angeordnete Dichteinrichtung (62) zur Abdichtung eines durch das Gehäuse (24) hindurchgeführten Kabels (12) vorgesehen ist.

13. Kabeldurchführungseinrichtung (10) nach Anspruch 12, **dadurch gekennzeichnet, dass** die Dichteinrichtung (62) mindestens einen sich konisch verjüngenden Dichtkörper (64) aufweist.

14. Kabeldurchführungseinrichtung (10) nach einem der voranstehenden Ansprüche, **dadurch gekennzeichnet, dass** das Gehäuse (24) einen Befestigungskörper (32) zur Befestigung an der Wand (16) und einen mit dem Befestigungskörper (32) verbindbaren, vorzugsweise verschraubbaren, Gehäusekörper (34) aufweist.

## Claims

1. Cable leadthrough device (10) for leading a cable (12) through an opening (14) in a wall (16), having a housing (24) that can be fastened in the area of the opening (14), wherein the cable (12) can be led through the housing (24) along a leadthrough channel (28) parallel to a leadthrough axis (22), and also having a strain relief device (42) with at least one clamping element (44) for resting against a cable (12) led through the leadthrough channel (28), wherein the at least one clamping element (44) is mounted at the housing (24) by means of a guide device (52) so as to be movable along a guide axis (54) inclined in relation to the leadthrough axis (22), between a clamping position, in which it radially narrows the leadthrough channel (28), and a release position, in which it releases the leadthrough channel (28), wherein a force application system (72) is provided for generating a driving force with at least one force component that acts along the guide axis (54) and that forces the at least one clamping element (44) towards its clamping position, **characterized in that** a manually actuatable release device (80) is provided, by means of which the at least one clamping element (44) is transferable from its clamping position into its release position.

2. Cable leadthrough device (10) according to claim 1, **characterized in that** the leadthrough axis (22) encloses an acute angle (55) with the guide axis (54), preferably an angle (55) between 5° and 45°, in particular an angle (55) between 15° and 30°.

3. Cable leadthrough device (10) according to any of the preceding claims, **characterized in that** the at least one clamping element (44) has a clamping surface (46) for resting against a led-through cable (12), wherein the clamping surface (46) extends completely or at least with a partial section parallel to the leadthrough axis (22).

4. Cable leadthrough device (10) according to claim 3, **characterized in that** the clamping surface (46) has a surface structuring for improving the adhesion between the clamping surface (46) and a led-through cable (12), preferably in the form of a plurality of clamping knobs (48) arranged in a distributed manner over the clamping surface (46).

5. Cable leadthrough device (10) according to any of the preceding claims, **characterized in that** the at least one clamping element (44) has a sliding slope (50) which is preferably arranged at the edge, for inserting a cable (12) into the leadthrough channel (28), wherein the sliding slope (50) preferably has an inclination to the leadthrough axis (22) opposite to the guide axis (54).

6. Cable leadthrough device (10) according to any of the preceding claims, **characterized in that** several clamping elements (44) are provided, which are preferably arranged in a regularly distributed manner over the circumference of the leadthrough channel (28).

7. Cable leadthrough device (10) according to any of the preceding claims, **characterized in that** the force application system (72) has at least one spring (74), preferably in the form of a compression spring.

8. Cable leadthrough device (10) according to to any of the preceding claims, **characterized in that** the release device (80) has an actuating element (82), wherein at least one component of an actuating force exerted on the at least one clamping element (44) by an actuation of the actuating element (82) is effective along the guide axis (54) and applies the at least one clamping element (44) in the direction of its release position.

9. Cable leadthrough device (10) according to claim 8, **characterized in that** the actuating element (82) is mounted at the housing (24) movably along an actuating path between a rest position and an actuating position, and **in that** the actuating force is generatable by or when transferring from the rest position to the actuating position.

10. Cable leadthrough device (10) according to any of the preceding claims, **characterized in that** the actuating element (82) is rotatably mounted at the housing (24) and is rotatable about the leadthrough axis (22) of the housing (24).

11. Cable leadthrough device (10) according to one of claims 8 to 10, **characterized in that** the actuating element (82) has a leadthrough opening (90) for leading through a cable (12), wherein a sealing membrane (88) for sealing a led-through cable (12) is provided in the region of the leadthrough opening (90).

12. Cable leadthrough device (10) according to any of the preceding claims, **characterized in that** a sealing apparatus (62) which is arranged at the housing (24) for sealing a cable (12) which is led through the housing (24) is provided.

13. Cable leadthrough device (10) according to claim 12, **characterized in that** the sealing apparatus (62) has at least one conically narrowing sealing body (64).

14. Cable leadthrough device (10) according to any of the preceding claims, **characterized in that** the housing (24) has a fastening body (32) for fastening to the wall (16) and a preferably screwable housing body (34) which can be connected to the fastening body (32).

## Revendications

1. Dispositif de passage de câble (10) destiné à faire passer un câble (12) à travers une ouverture (14) dans une paroi (16), avec un boîtier (24) qui peut être fixé au niveau de l'ouverture (14), dans lequel on peut faire passer le câble (12) à travers le boîtier (24) le long d'un canal de passage (28) parallèle à l'axe de passage (22), avec un dispositif de décharge de traction (42) qui présente au moins un élément de serrage (44) pour venir en appui sur un câble (12) que l'on fait passer à travers le canal de passage (28), dans lequel ledit au moins un élément de serrage (44) est logé sur le boîtier (24) de manière à pouvoir coulisser au moyen d'un dispositif de guidage (52) le long d'un axe de guidage (54) incliné par rapport à l'axe de passage (22) et peut être transférée entre une position de serrage qui rétrécit radialement le canal de passage (28) et une position de libération qui débloque le canal de passage (28), et dans lequel un dispositif d'application de force (72) est prévu pour générer une force d'entraînement qui est efficace avec au moins une composante de force le long de l'axe de guidage (54) et sollicite ledit au moins un élément de serrage (44) dans le sens de sa position de serrage, **caractérisé par le fait qu'**un dispositif de libération (80) apte à être actionné manuellement est prévu, au moyen duquel on peut faire passer ledit au moins un élément de serrage (44) de sa position de serrage dans sa position de libération.

2. Dispositif de passage de câble (10) selon la revendication 1, **caractérisé par le fait que** l'axe de passage (22) forme avec l'axe de guidage (54) un angle aigu (55), de préférence un angle (55) compris entre 5° et 45°, en particulier un angle (55) compris entre 15° et 30°.

3. Dispositif de passage de câble (10) selon l'une quelconque des revendications précédentes, **caractérisé par le fait que** ledit au moins un élément de serrage (44) présente une surface de serrage (46) pour venir en appui sur un câble (12) mené à travers, dans lequel la surface de serrage (46) s'étend complètement ou au moins avec une section partielle parallèlement à l'axe de passage (22).

4. Dispositif de passage de câble (10) selon la revendication 3, **caractérisé par le fait que** la surface de serrage (46) présente une structuration de surface pour améliorer l'adhérence entre la surface de serrage (46) et un câble (12) mené à travers, de préférence sous la forme d'une pluralité de projections de serrage (48) disposées de manière à être réparties sur la surface de serrage (46).

5. Dispositif de passage de câble (10) selon l'une quelconque des revendications précédentes, **caractérisé par le fait que** ledit au moins un élément de serrage (44) présente un biseau de glissement (50) qui est disposé de préférence sur le bord et est destiné à introduire un câble (12) dans le canal de passage (28), dans lequel ledit biseau de glissement (50) présente de préférence une inclinaison par rapport à l'axe de passage (22), qui est opposée à l'axe de guidage (54).

6. Dispositif de passage de câble (10) selon l'une quelconque des revendications précédentes, **caractérisé par le fait que** plusieurs éléments de serrage (44) sont prévus qui, de préférence, sont disposés de manière à être régulièrement répartis sur la circonférence du canal de passage (28).

7. Dispositif de passage de câble (10) selon l'une quelconque des revendications précédentes, **caractérisé par le fait que** le dispositif d'application de force (72) comprend au moins un ressort (74), de préférence sous la forme d'un ressort de pression.

8. Dispositif de passage de câble (10) selon l'une quelconque des revendications précédentes, **caractérisé par le fait que** le dispositif de libération (80) comprend un élément d'actionnement (82), dans lequel au moins une composante d'une force d'actionnement exercée sur ledit au moins un élément de serrage (44) par un actionnement de l'élément d'actionnement (82) est efficace le long de l'axe de guidage (54) et sollicite ledit au moins un élément de serrage (44) dans le sens de sa position de libération.

9. Dispositif de passage de câble (10) selon la revendication 8, **caractérisé par le fait que** l'élément d'actionnement (82) est logé sur le boîtier (24) de manière à être déplaçable le long d'un chemin d'actionnement entre une position de repos et une position d'actionnement et que la force d'actionnement peut être générée par ou lors du passage de la position de repos dans la position d'actionnement.

10. Dispositif de passage de câble (10) selon l'une quelconque des revendications précédentes, **caractérisé par le fait que** l'élément d'actionnement (82) est logé à rotation sur le boîtier (24) et peut être tourné autour de l'axe de passage (22) du boîtier (24).

11. Dispositif de passage de câble (10) selon l'une quelconque des revendications 8 à 10, **caractérisé par le fait que** l'élément d'actionnement (82) présente une ouverture de passage (90) pour faire passer un câble (12), une membrane d'étanchéité (88) destinée à étancher un câble (12) mené à travers étant prévue au niveau de l'ouverture de passage (90).

12. Dispositif de passage de câble (10) selon l'une quelconque des revendications précédentes, **caractérisé par le fait qu'**un dispositif d'étanchéité (62) disposé sur le boîtier (24) est prévu pour étancher un câble (12) passé à travers le boîtier (24).

13. Dispositif de passage de câble (10) selon la revendication 12, **caractérisé par le fait que** le dispositif d'étanchéité (62) présente au moins un corps d'étanchéité (64) se rétrécissant de manière conique.

14. Dispositif de passage de câble (10) selon l'une quelconque des revendications précédentes, **caractérisé par le fait que** le boîtier (24) présente un corps de fixation (32) pour la fixation à la paroi (16) ainsi qu'un corps de boîtier (34) qui peut être relié, de préférence vissé, au corps de fixation (32).
